# EUROPEAN PATENT APPLICATION

(11) **EP 4 710 755 A1**
(43) Date of publication of application: **18.03.2026**
(21) Application number: 25195226.3
(22) Date of filing: 11.08.2025
(51) Int. Cl.: A01K 1/01

(54) **PET URINE COLLECTION APPARATUS**

(30) Priority: 13.08.2024 US 202463682685 P
(71) Applicant: Beyond Environmental, LLC., Geneva, IL 60134 (US)
(72) Inventor: SIMS, Bryan, Geneva, 60134 (US)
(74) Representative: IPAZ

(57) **Abstract**

An apparatus (10) for collecting pet urine includes a frame (12) including a plurality of vertical sidewalls (14) defining an internal cavity (16), a porous mesh frame (18) configured for accommodation at an upper end of the internal cavity, an adsorbent pad (28) disposed upon an upper surface of the mesh frame, a pair of drip trays (34) fixed to the frame and disposed below the porous mesh frame, the drip trays being inclined towards each other and oriented to define a drainage slot (40) along a common edge (42), and a filter tray (50) slidably disposed in the frame and located below the drainage slot for receiving pet urine passing through the drainage slot.

## Description

### BACKGROUND

The present invention relates generally to pet waste collection devices, and more specifically to a pet urine collection apparatus to be used in situations where it is difficult or inconvenient to take the pet outside for walks.

Pet ownership is on the rise, with many individuals and couples opting to raise pets instead of children, and also many families have decided to include a pet in their family along with children. For those pet owners in relatively good health and living in residences with easy outdoor access, periodically walking the pet dog outside is an accepted part of the daily routine.

However, for older pet owners, those with health problems, and/or those pet owners living in multi-floor or high rise apartment buildings, regular trips outside to walk the dog are difficult or very inconvenient, especially when the dog's needs become urgent. Also, inclement weather may also impair outdoor walking for any pet owner, regardless of where they live. To address such needs, portable pet waste collection devices have been developed, to temporarily collect pet waste particularly pet urine so that the pet can relieve themselves inside the home or on a nearby deck or patio, without outside walking.

Conventional pet waste collection devices vary in construction and efficiency. A basic solution is referred to as a "pee pad," which is an absorbent mat that rests on the floor. The pet urinates on the pad, and the urine is absorbed by a layer of absorbent material set upon a rubber-like mat material that protects the floor from moisture. The pad then needs to be disposed of or hosed off. A drawback of such pads is that the dog can "overload" the capacity of the pad, resulting in leakage on the floor.

Other, more sophisticated units include a box-like housing with an adsorbent pad that is removable from the housing. Often, the adsorbent pad is just artificial turf mounted on a perforated rubber base. Urine then drains through the mat and is collected in a lower tray for disposal. The tray is optionally treated with a deodorizing/neutralizing composition that reduces the odor. In some models, the pad collects urine, which is funneled into a bladder-like bag. The bag is supported by a tray, and once filled, the user disconnects the bag from the internal system plumbing, and disposes of the urine, for example in a nearby toilet.

A drawback of such a system is that the internal plumbing conduits and connectors in some cases have been known to leak. Also, handling of the bladder-like collection bag is awkward and often unpleasant. Another drawback of conventional pet waste collection devices is that they generate odors from the stored urine, which permeates the residence. Still another drawback of such devices is that they are difficult to clean.

Accordingly, there is a need for an effective yet economical approach to collecting and disposing of pet waste, particularly urine, in a way which addresses the odor and leakage problem identified above.

### SUMMARY

The above-listed need is met or exceeded by the present pet urine collection apparatus which, in an improved design, addresses the drawbacks of conventional pet urine collection systems. A first feature is a urine adsorbent pad incorporating a bio-enzymatic odor reducer, preferably including bacillus in spore form. Incorporation of such bio agents in the pad reduces odors. Another feature is the inclined pet trays located beneath the adsorbent pad, which define between them an elongate drainage slot that collects urine passing through the adsorbent pad, impacting the pet tray. Still another feature of the present apparatus is a filter tray disposed below the drainage slot for collecting urine dripping through the slot. Preferably, the filter tray is provided with a removable, disposable filter sock of absorbent material that absorbs the collected urine for convenient disposal.

More specifically, an apparatus for collecting pet urine includes a frame including a plurality of vertical sidewalls defining an internal cavity, a porous mesh frame configured for accommodation at an upper end of the internal cavity, an adsorbent pad disposed upon an upper surface of the mesh frame, a pair of drip trays fixed to the frame and disposed below the porous mesh frame, the drip trays being inclined towards each other and oriented to define a drainage slot along a common edge, and a filter tray slidably disposed in the frame and located below the drainage slot for receiving pet urine passing through the drainage slot.

In an embodiment, the adsorbent pad is impregnated with at least one bio-enzymatic odor reducer, and preferably the enzymatic odor reducer is taken from the group consisting of *B. amyloliquefaciens, B. licheniformis, B. subtilis* and *B. pumilus.* In an embodiment, the frame sidewalls include a front wall defining an opening dimensioned to slidingly accommodate the filter tray.

A feature of the frame is a track configured for enhancing reciprocal sliding action of the filter tray, including rollers on the tray for engaging the track. In an embodiment, an absorbent sock positioned in the filter tray. Preferably, when employed, the sock is made of recycled diaper fluff. In one embodiment, the filter tray has a front panel with an access opening dimensioned for removal of the absorbent sock. Preferably, the filter tray is made of stainless steel.

In an embodiment, the frame includes a plurality of elongate, rigid frame members connected at free ends to corner members, the corner members having formed recesses configured for accommodating the free ends. Each corner member includes vertical slots dimensioned for slidably accommodating panels forming said sidewalls of the frame.

In another embodiment, an apparatus for collecting pet urine includes a frame including a plurality of vertical sidewalls defining an internal cavity, a porous mesh frame configured for accommodation at an upper end of the internal cavity, an adsorbent pad disposed upon an upper surface of the mesh frame, the adsorbent pad is impregnated with at least one bio-enzymatic odor reducer taken from the group consisting of *B. amyloliquefaciens, B. licheniformis, B. subtilis* and *B. pumilus,* a pair of drip trays fixed to the frame and disposed below the porous mesh frame, the drip trays being inclined towards each other and oriented to define a drainage slot along a common edge, a filter tray slidably disposed in the frame and located below the drainage slot for receiving pet urine passing through the drainage slot, the sidewalls of the frame include a front wall defining an opening dimensioned to slidingly accommodate the filter tray; and an absorbent sock positioned in the filter tray.

### BRIEF DESCRIPTION OF THE DRAWINGS

FIG. 1 is a top perspective view of the present apparatus;
FIG. 2 is an exploded perspective view of the apparatus of FIG. 1;
FIG. 3 is a fragmentary cross-section of the present apparatus;
FIG. 4 is a fragmentary front perspective view of the apparatus of FIG. 2;
FIG. 5 is another fragmentary top perspective view of the present apparatus;
FIG. 6 is a top perspective view of a collection drawer with an absorbent sock;
FIG. 7 is a top perspective view of an alternate embodiment of the drawer of FIG. 6;
FIG. 8 is a bottom perspective view of the present apparatus; and
FIG. 9 is an exploded perspective view of the present apparatus.

### DETAILED DESCRIPTION

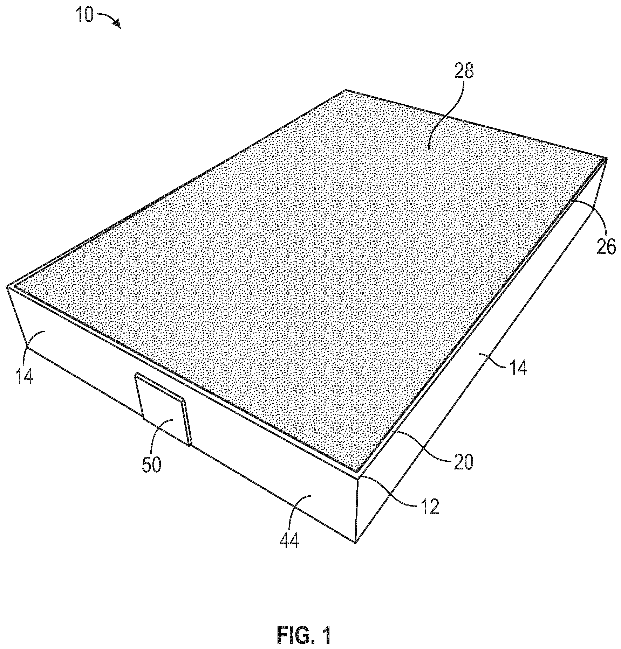

Referring now to FIGs. 1-4 and 9, the present pet urine collection apparatus is generally designated 10 and includes a frame 12 including a plurality of vertical sidewalls 14 defining an internal cavity 16. A porous mesh frame 18 has a sturdy peripheral rim 19 supporting a web of porous fabric 21. Preferably, the fabric 21 is self-supporting screen material made of metal or other rigid material. Upper edges 20 of the sidewalls 14 combine with upper edges 22 of formed corner members 24 define a seat for the mesh frame 18 at an upper end 26 of the internal cavity 16.

An adsorbent pad 28 is disposed upon an upper surface 30 of the mesh frame 18. Preferably, the pad 28 is made of a nonwoven hydrophobic fabric. More preferably, the pad 28 is a needle punch polyester and polypropylene blend and having a weight between approximately 250 grams per square meter (gsm) and approximately 700 gsm.

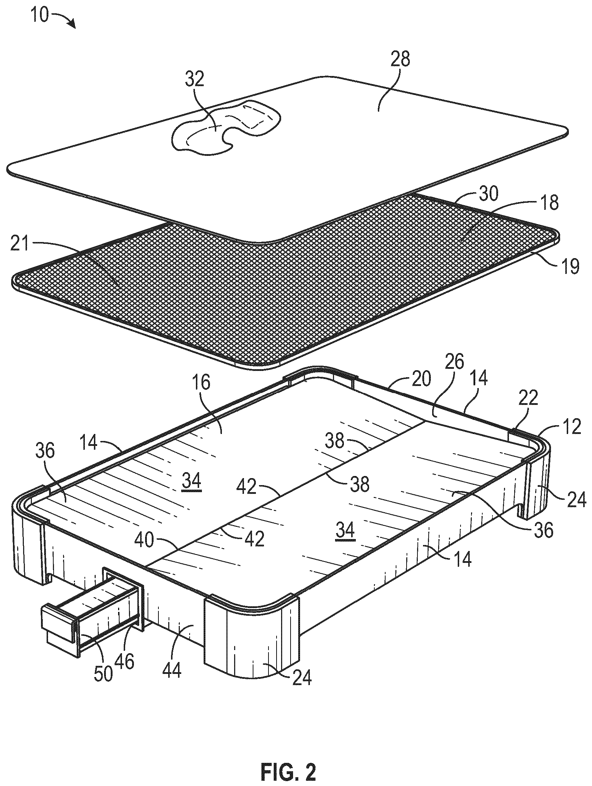

A feature of the pad 28 is that it is impregnated with a bio-enzymatic odor reducer 32 which includes bacillus in spore form. The bacillus is applied to the adsorbent pad 28 and is activated when contacted by animal waste. Preferably, the bacillus is one or more of *B. amyloliquefaciens, B. licheniformis, B. subtilis* and *B. pumilus.* It is also preferred that the bio-enzymatic odor reducer 32 also includes at least one odor counteractant and/or an emulsifier. Preferably still, the bio-enzymatic odor reducer 32 has approximately 20,000,000 colony forming units (CFU) of the bacillus per square inch of the adsorbent pad 28. As seen in FIG. 2, the pad 28 is placed upon the upper surface 30 of the mesh frame 18, which is sufficiently rigid to support the weight of the pad 28, as well as that of a pet (not shown) walking upon the pad 28 to deposit urine.

Referring now to FIGs. 2-5 and 9, below the mesh frame 18, a pair of drip trays 34 are fixed to the frame 12 to be inclined towards each other, with a higher end 36 affixed to the frame 12 and a lower end 38 oriented to define a drainage slot 40 along a common edge 42 of the adjacent trays 34. The drainage slot 40 is defined by the spacing of the respective edges 42, and is preferably centrally located in the internal cavity 16, however other locations are contemplated. Preferably, the drainage slot 40 extends a full length of the cavity 16 between respective sidewalls 14.

The sidewalls 14 of the frame 12 include a front wall 44 defining an opening 46, preferably surrounded by a rigid border 48 that is dimensioned to slidingly accommodate a filter tray 50. For enhanced cleanliness and odor control, the filter tray 50 is preferably made of stainless steel, however other materials are contemplated. A feature of the present apparatus 10 is that the filter tray 50 is slidably disposed in the frame 12 and is located below the drainage slot 40 for receiving pet urine passing through the drainage slot after previously passing through the pad 28 and impacting the inclined drip trays 34.

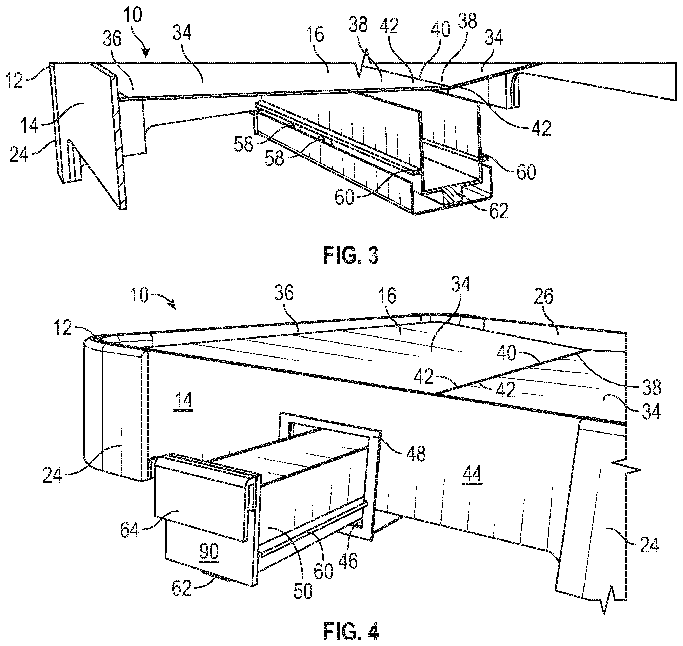

Referring now to FIGs. 3, 5, 8 and 9, included on the frame 12 is a track 52 for enhancing reciprocal sliding action of the filter tray 50. A tray-like base 54 is provided with laterally-spaced, vertically-projecting rails 56, and linearly spaced rollers 58 for providing reduced-friction engagement with the filter tray 50. Preferably, the filter tray 50 also has laterally projecting ribs 60 that slidingly engage at least one of the rails 56 and the rollers 58. As seen in FIG. 3, a guide spacer 62 depends from the filter tray 50 to reduce sliding friction in the track 52. As seen in FIGs. 2 and 4-6, the filter tray 50 is optionally provided with a pull handle 64.

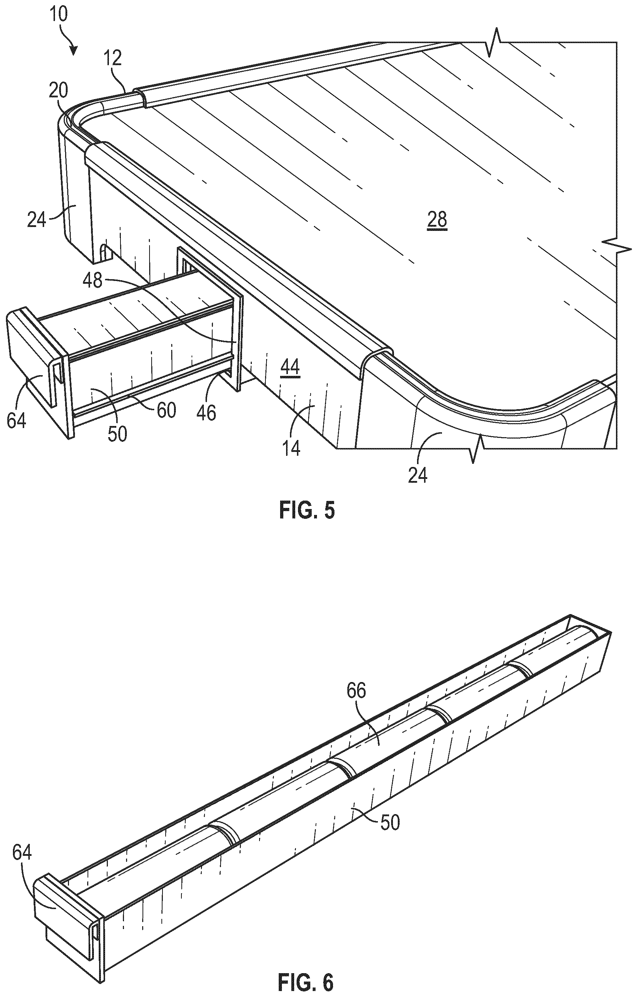

Referring now to FIG. 6, a preferred feature of the present apparatus 10 is an absorbent sock 66 configured and dimensioned to be removably located within the filter tray 50. Provided as a unit or in segments the purpose of the sock 66 is to absorb the urine entering the filter tray 50 through the drainage slot 40 so that a capacity of the filter tray is not exceeded, and also to provide an easy way for the user to remove the collected urine. Once sufficient urine is collected, or on a regular calendar basis, depending on the particular pet, the user opens the filter tray 50 by pulling it from the frame 12, and removes the sodden sock 66, which is disposable. Absorbance is enhanced by manufacturing the sock 66 from recycled diaper fluff pulp, preferably 100% fluff pulp.

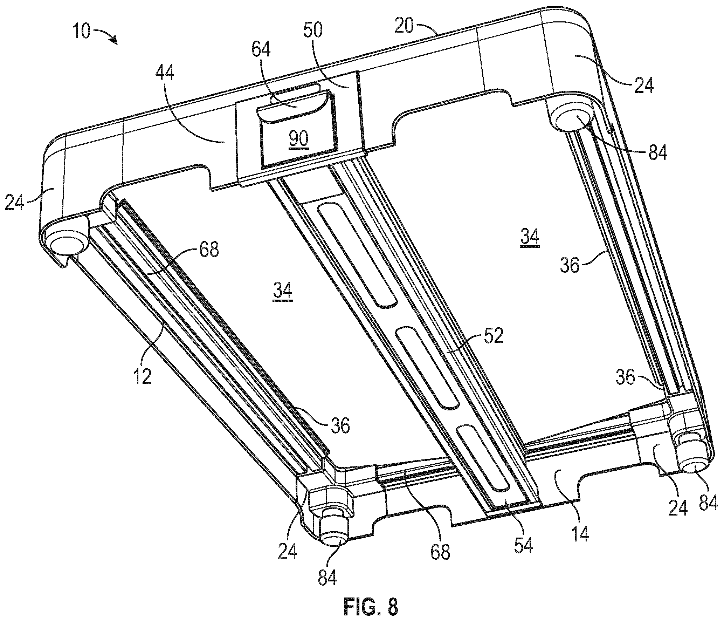

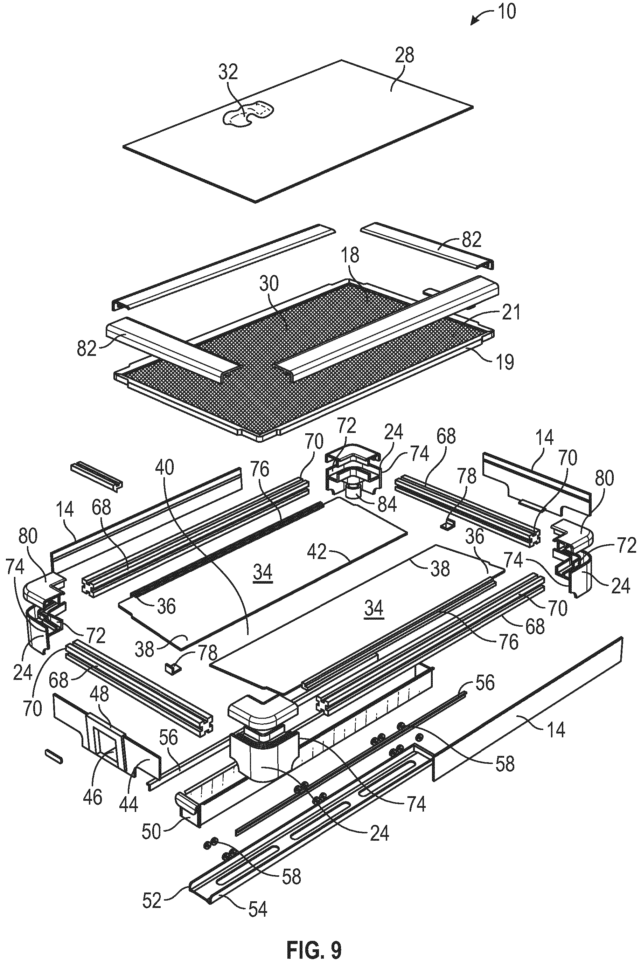

Referring now to FIGs. 8 and 9, the construction of the present pet urine collection apparatus 10 is shown in greater detail. Included on the frame 12 is a plurality of elongate, rigid frame members 68 connected at free ends 70 to recesses 72 in the formed, as by injection molding, corner members 24. Also included in the corner members 24 are vertical grooves 74 that slidingly accommodate the sidewalls 14. While other constructions are contemplated, the elongate members 68 preferably have an "X"-shaped cross-section, and thus are configured to accommodate rim clips 76 secured to the upper ends 36 of the drip trays 34, as well as drain clips 78 that hold and support the lower ends 38 of the drip trays as they form the drainage slot 40. Ornamental corner caps 80 cover the corner members 24, and frame caps 82 overlie the mesh frame 18. A plurality of rubber like feet 84 are also connected to the corner members 24.

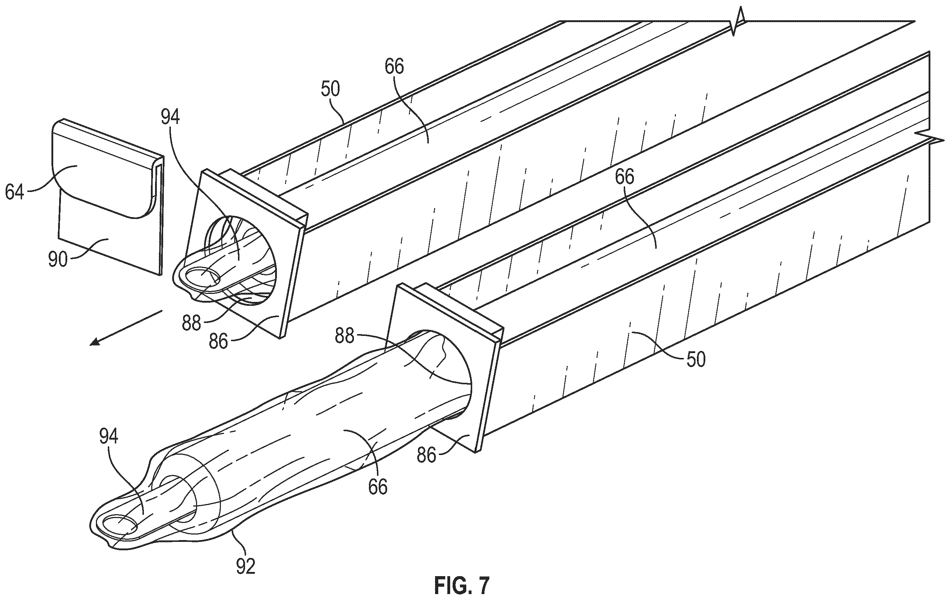

Referring now to FIG. 7, in an alternate embodiment, the filter tray 50 is provided with a front panel 86 having an opening 88 through which the user can remove the filter sock 66. A standard front panel 90 may be provided to cover the panel 86. To increase user convenience, the sock 66 is provided with a covering of a water permeable bag 92, and a grip tab 94 for enhanced removal of the sock from the filter tray 50.

While a particular embodiment of the present pet urine collection apparatus has been described herein, it will be appreciated by those skilled in the art that changes and modifications may be made thereto without departing from the invention in its broader aspects and as set forth in the following claims.

## Claims

1. An apparatus for collecting pet urine, comprising:
- a frame including a plurality of vertical sidewalls defining an internal cavity;
- a porous mesh frame configured for accommodation at an upper end of said internal cavity;
- an adsorbent pad disposed upon an upper surface of said mesh frame;
- a pair of drip trays fixed to said frame and disposed below said porous mesh frame, said drip trays being inclined towards each other and oriented to define a drainage slot along a common edge; and
- a filter tray slidably disposed in said frame and located below said drainage slot for receiving pet urine passing through said drainage slot.

2. The apparatus of claim 1, wherein said adsorbent pad is impregnated with at least one bio-enzymatic odor reducer.

3. The apparatus of claim 2, wherein said at least one bio-enzymatic odor reducer is taken from the group consisting of *B. amyloliquefaciens, B. licheniformis, B. subtilis* and *B. pumilus.*

4. The apparatus of anyone of claims 1 to 3, wherein said sidewalls of said frame include a front wall defining an opening dimensioned to slidingly accommodate said filter tray.

5. The apparatus of anyone of claims 1 to 4, further including a track on said frame for enhancing reciprocal sliding action of said filter tray.

6. The apparatus of anyone of claims 1 to 5, further including an absorbent sock positioned in said filter tray, said absorbent sock being optionally made of recycled diaper fluff.

7. The apparatus of anyone of claims 1 to 6, wherein said filter tray has a front panel with an access opening dimensioned for removal of an absorbent sock.

8. The apparatus of anyone of claims 1 to 7, wherein said filter tray is made of stainless steel.

9. The apparatus of anyone of claims 1 to 8, wherein said frame includes a plurality of elongate, rigid frame members connected at free ends to corner members, said corner members having formed recesses configured for accommodating said free ends, each said of corner members optionally including vertical slots dimensioned for slidably accommodating panels forming said sidewalls of said frame.

10. An apparatus for collecting pet urine, comprising:
- a frame including a plurality of vertical sidewalls defining an internal cavity;
- a porous mesh frame configured for accommodation at an upper end of said internal cavity;
- an adsorbent pad disposed upon an upper surface of said mesh frame, said adsorbent pad is impregnated with at least one bio-enzymatic odor reducer taken from the group consisting of *B. amyloliquefaciens, B. licheniformis, B. subtilis* and *B. pumilus;*
- a pair of drip trays fixed to said frame and disposed below said porous mesh frame, said drip trays being inclined towards each other and oriented to define a drainage slot along a common edge;
- a filter tray slidably disposed in said frame and located below said drainage slot for receiving pet urine passing through said drainage slot;
said sidewalls of said frame include a front wall defining an opening dimensioned to slidingly accommodate said filter tray; and
including an absorbent sock positioned in said filter tray.

11. The apparatus of claim 10, further including a track on said frame for enhancing reciprocal sliding action of said filter tray.

12. The apparatus of claim 10 or 11, wherein said absorbent sock is made of recycled diaper fluff.

13. The apparatus of anyone of claims 10 to 12, wherein said filter tray has a front wall with an access opening dimensioned for removal of an absorbent sock.

14. The apparatus of anyone of claims 10 to 13, wherein said filter tray is made of stainless steel.

15. The apparatus of anyone of claims 10 to 14, wherein said frame includes a plurality of elongate, rigid frame members connected at free ends to corner members, said corner members having formed recesses configured for accommodating said free ends, each said corner members optionally including vertical slots dimensioned for slidably accommodating panels forming said sidewalls of said frame.
